# EUROPEAN PATENT APPLICATION

(11) **EP 4 319 061 A1**
(43) Date of publication of application: **07.02.2024**
(21) Application number: 22774712.8
(22) Date of filing: 07.02.2022
(51) Int. Cl.: H04L 12/28, G08G 1/09, H04W 4/00, H04W 4/44, H04W 4/48, H04W 12/03, H04W 12/12

(54) **ONBOARD COMMUNICATION DEVICE, COMMUNICATION METHOD, AND COMMUNICATION SYSTEM**

(30) Priority: 25.03.2021 JP 2021051639
(71) Applicant: Sony Group Corporation, Tokyo 108-0075 (JP)
(72) Inventor: SHIMEZAWA, Kazuyuki, Tokyo 108-0075 (JP); UCHIYAMA, Hiromasa, Tokyo 108-0075 (JP); SUGAYA, Shigeru, Tokyo 108-0075 (JP)
(74) Representative: Witte, Weller & Partner Patentanwälte mbB
(86) International application number: PCT/JP2022/004613
(87) International publication number: WO 2022/201911

(57) **Abstract**

An in-vehicle communication device (100) includes a wired communication unit (130), a wireless communication unit (120), and a control unit (150). The wired communication unit (130) performs wired communication via a wired communication network constructed among a plurality of devices mounted on a vehicle. The wireless communication unit (120) performs wireless communication via a wireless communication network constructed among the plurality of devices. The control unit (150) transmits first data corresponding to transmission data via the wired communication unit (130) and transmits second data corresponding to the transmission data via the wireless communication unit (120) according to a predetermined condition.

## Description

### Field

The present disclosure relates to an in-vehicle communication device, a communication method, and a communication system.

### Background

In recent years, efforts for practical application of automated driving have been actively made. In automated driving, an automobile is basically controlled based on data from sensors or cameras in the vehicle. Therefore, in order to perform automated driving, communication in the vehicle (intra-vehicle communication) is important. Examples of the intra-vehicle communication include wired communication and wireless communication. In addition, a technology of combining wired communication and wireless communication is known as intra-vehicle communication.

### Citation List

### Patent Literature

Patent Literature 1: JP 2018-006786 A

### Summary

### Technical Problem

As described above, in automated driving, since an automobile is controlled on the basis of data from sensors or cameras in the vehicle, for example, it is required to construct a robust system capable of performing communication even when a failure or unauthorized access from the outside occurs.

Therefore, the present disclosure provides a mechanism capable of realizing more robust intra-vehicle communication.

Note that the above problem or object is merely one of a plurality of problems or objects that can be solved or achieved by the plurality of embodiments disclosed in the present specification.

### Solution to Problem

According to the present disclosure, an in-vehicle communication device is provided. The in-vehicle communication device includes a wired communication unit, a wireless communication unit, and a control unit. The wired communication unit performs wired communication via a wired communication network constructed among a plurality of devices mounted on a vehicle. The wireless communication unit performs wireless communication via a wireless communication network constructed among the plurality of devices. The control unit transmits first data corresponding to transmission data via the wired communication unit and transmits second data corresponding to the transmission data via the wireless communication unit according to a predetermined condition.

### Brief Description of Drawings

FIG. 1 is a diagram for explaining an example of a zone architecture.
FIG. 2 is a diagram illustrating an example of a schematic configuration of a communication system according to an embodiment of the present disclosure.
FIG. 3 is a diagram illustrating an example of a schematic configuration of a communication system according to an embodiment of the present disclosure.
FIG. 4 is a diagram illustrating an example of a schematic configuration of a communication system according to an embodiment of the present disclosure.
FIG. 5 is a diagram illustrating an example of a schematic configuration of a communication system according to an embodiment of the present disclosure.
FIG. 6 is a diagram illustrating an example of a schematic configuration of a communication system according to an embodiment of the present disclosure.
FIG. 7 is a diagram illustrating an example of a schematic configuration of a communication system according to an embodiment of the present disclosure.
FIG. 8 is a diagram illustrating an example of a schematic configuration of a communication system according to an embodiment of the present disclosure.
FIG. 9 is a block diagram illustrating an example of a configuration of an in-vehicle communication device according to an embodiment of the present disclosure.
FIG. 10 is a diagram for explaining an example of communication according to an embodiment of the present disclosure.
FIG. 11 is a diagram for explaining an example of communication according to an embodiment of the present disclosure.
FIG. 12 is a diagram for explaining an example of transmission processing according to an embodiment of the present disclosure.
FIG. 13 is a diagram for explaining another example of the transmission processing according to an embodiment of the present disclosure.
FIG. 14 is a diagram for explaining selection of a network by a transmission node according to an embodiment of the present disclosure.
FIG. 15 is a diagram for explaining an example of reception processing according to an embodiment of the present disclosure.
FIG. 16 is a diagram for explaining another example of the reception processing according to an embodiment of the present disclosure.

### Description of Embodiments

Hereinafter, embodiments of the present disclosure will be described in detail with reference to the accompanying drawings. Note that, in the present specification and the drawings, components having substantially the same functional configurations are denoted by the same reference numerals, and redundant description is omitted.

Furthermore, in the present specification and the drawings, similar components of the embodiments may be distinguished by adding different alphabets or numbers after the same reference numerals. However, in a case where it is not necessary to particularly distinguish each of similar components, only the same reference numeral is assigned.

One or more embodiments (examples and modifications) described below can each be implemented independently. On the other hand, at least some of the plurality of embodiments described below may be appropriately combined with at least some of other embodiments. The plurality of embodiments may include novel features different from each other. Therefore, the plurality of embodiments can contribute to solving different objects or problems, and can exhibit different effects.

### <<1. Introduction>>

### <1.1. Zone Architecture>

In recent years, practical application of automated driving, electric vehicles (EVs), and energy saving of vehicles have been promoted. In addition, with the evolution of vehicles, the vehicle itself is connected to a network (connected car), and many sensors are mounted on the vehicle.

As described above, when many sensors are mounted on a vehicle, cables for connecting the sensors are required, which hinder weight reduction of the vehicle.

Therefore, in recent years, a technology called a zone architecture has attracted attention in intra-vehicle communication.

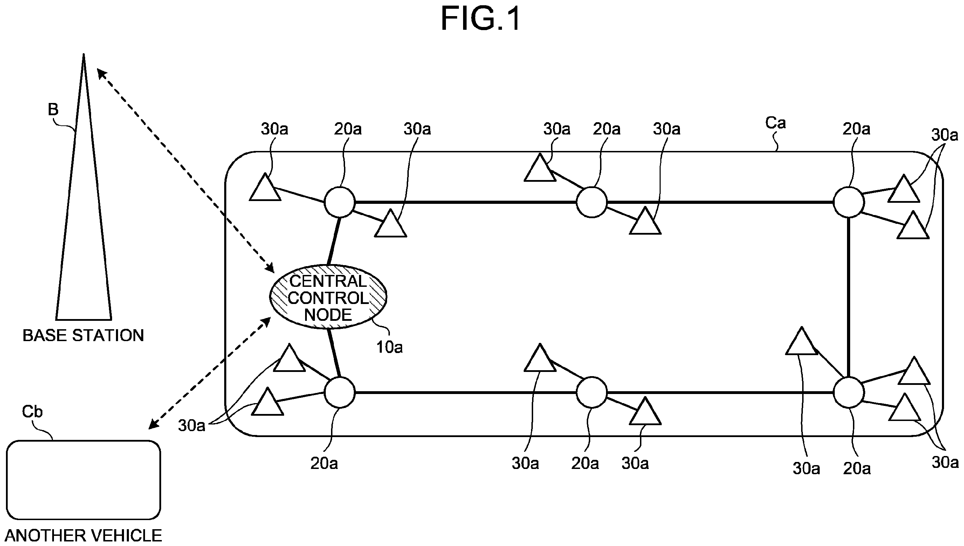

Here, an example of zone architecture will be described with reference to FIG. 1. FIG. 1 is a diagram for explaining an example of a zone architecture.

In the zone architecture illustrated in FIG. 1, a vehicle Ca is divided into a plurality of regions (zones), and a control node 20a (hereinafter, also referred to as a zone control node 20a) is provided in each region. The plurality of zone control nodes 20a is connected in a ring shape by the backbone cable, for example, and perform wired communication with each other. As described above, in the vehicle Ca illustrated in FIG. 1, a ring type wired communication network is constructed. Another example of the wired communication network includes a configuration in which a plurality of zone control nodes 20a is connected to each other in a mesh shape by the backbone cable.

In addition, the zone control node 20a in each region is connected to one or more devices 30a by, for example, cables, and communicates with each device 30a.

The device 30a includes, for example, a sensor such as a camera or a distance measuring device, a control device that controls an engine or the like, and a display device such as a car navigation system or a DVD. As described above, the device 30a is mounted on the vehicle Ca, for example, and includes a device for acquiring information for performing automated driving and performing control, and a device for presenting entertainment, a vehicle status, and the like to a user who gets on the vehicle Ca.

The device 30a communicates with another device 30a mounted on the vehicle Ca via the zone control node 20a.

In this manner, by realizing the intra-vehicle communication using the zone architecture, it is possible to reduce the number of cables connecting the sensors and the cable length, and it is possible to reduce the weight of the vehicle and improve the fuel efficiency.

Note that, in the intra-vehicle communication, a time sensitive network (TSN) can be constructed. The TSN is a network based on the Ethernet, and is a network in which time synchronization is guaranteed and real-time property can be secured.

In addition, in use cases such as remote driving and platooning, it is necessary to access the control system of the vehicle Ca from the outside of the vehicle. In this case, a network in the vehicle Ca (hereinafter, also referred to as an in-vehicle local area network (LAN)) needs to be connected to an external network.

Therefore, in FIG. 1, a central control node 10a is provided in the vehicle Ca. The central control node 10a is connected to the zone control node 20a via, for example, a cable. As a result, the central control node 10a communicates with the zone control node 20a and the device 30a via the in-vehicle LAN.

In addition, the central control node 10a performs wireless communication with another vehicle Cb and a base station B. Note that, in the following drawings, wired communication is indicated by a straight line, and wireless communication is indicated by a dotted line.

In this manner, by zoning the vehicle Ca and providing the zone control node 20a for each zone, it is possible to reduce the number of cables connecting the sensors and the cable length, and it is possible to reduce the weight of the vehicle and improve the fuel efficiency. In addition, by providing the central control node 10a in the in-vehicle LAN and connecting to a network outside the vehicle via the central control node 10a, security can be improved.

### <1.2. Problem>

As described above, in the vehicle Ca, the in-vehicle LAN is constructed by dividing the vehicle Ca into a plurality of zones based on the zone architecture and connecting the zones by the backbone cable. In the backbone cable, communication is performed regardless of the type of data (for example, requirements for importance, latency, and the like). Here, the type of data includes, for example, data for controlling the vehicle Ca such as an accelerator and a brake, data related to entertainment such as TV and music, data detected by a sensor, data related to opening and closing of a door, and the like.

In addition, as described above, the number of cables of the vehicle Ca is reduced by the zone architecture. On the other hand, the backbone cable connecting the zone control nodes 20a is very important. Therefore, in a case where a failure occurs in the backbone cable, various systems and functions in the vehicle Ca are affected.

In addition, in a case where connection from an external network to the inside of the in-vehicle LAN is performed, robustness to security is very important. In particular, access to the control system of the vehicle Ca is required to have very high robustness also from the viewpoint of cyber security. In a case where a malicious person accesses the control system via an external network and controls the vehicle Ca, a serious accident may be caused.

As described above, in the in-vehicle LAN adopting the zone architecture, it is required to realize more robust intra-vehicle communication.

### <1.3. Outline of Proposed Technology>

Therefore, in the proposed technology of the present disclosure, communication is made redundant by performing wireless communication in an in-vehicle LAN constructed by a wired cable.

More specifically, in the technology of the present disclosure, both a wired communication network and a wireless communication network are constructed in a vehicle, and an in-vehicle communication device mounted in the vehicle performs communication via both the wired communication network and the wireless communication network.

The in-vehicle communication device transmits first data corresponding to transmission data via the wired communication network, and transmits second data corresponding to the transmission data via the wireless communication network. Here, for example, the first data and the second data may be the same data.

Note that the in-vehicle communication device is any of the above-described central control node, zone control node, device, and wireless control node described later.

As described above, the in-vehicle communication device transmits the first data via the wired communication network and transmits the second data via the wireless communication network, so that communication can be made redundant, and more robust intra-vehicle communication can be realized.

### <<2. Configuration of Communication System>>

As described above, in the system to which the proposed technology is applied, a wired communication network and a wireless communication network are constructed. Here, the wireless communication network may be constructed in several topologies such as a ring type, a star type, and a tree type. The proposed technology can be applied to communication systems including wireless communication networks having different topologies. Therefore, first, a configuration example of a communication system to which the proposed technology is applied will be described for each topology of a wireless communication network.

### <2.1. Wireless Communication Between Zone Control Nodes>

### <2.1.1. Wireless Communication via Wireless Control Node>

### (Star Type)

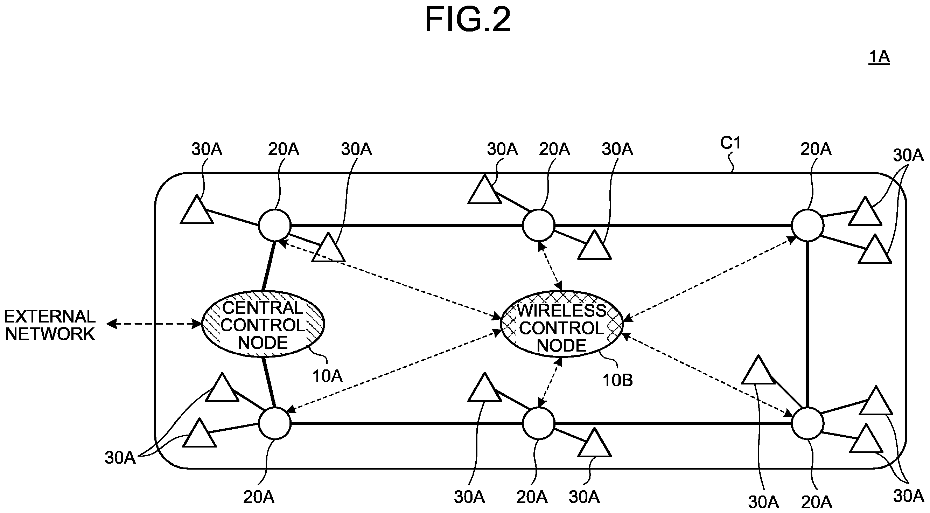

First, an example of a schematic configuration of a communication system 1A to which the proposed technology is applied will be described with reference to FIG. 2. FIG. 2 is a diagram illustrating an example of a schematic configuration of the communication system 1A according to an embodiment of the present disclosure. As illustrated in FIG. 2, the communication system 1A according to the present embodiment is provided in a vehicle C1. The communication system 1A includes a central control node 10A, a wireless control node 10B, zone control nodes 20A, and devices 30A.

The central control node 10A is an in-vehicle communication device that controls communication in a wired communication network. The central control node 10A is connected to the zone control nodes 20A in a ring shape via the backbone cable, and performs wired communication with the zone control nodes 20A. In addition, the central control node 10A communicates with the devices 30A and the wireless control node 10B via the zone control nodes 20A.

In addition, the central control node 10A is connected to an external network via wireless communication. The central control node 10A communicates with a base station (not illustrated) through Uu link communication in 3GPP, or communicates with other vehicles (not illustrated) through sidelink communication, for example.

The wireless control node 10B is an in-vehicle communication device that controls communication in a wireless communication network. The wireless control node 10B performs wireless communication with each of the plurality of zone control nodes 20A.

The zone control node 20A is provided in each region (zone) obtained by dividing the vehicle C1 into a plurality of regions. The zone control nodes 20A are connected in a ring shape via the backbone cable, and performs wired communication with the other zone control nodes 20A and the central control node 10A.

In addition, the zone control nodes 20A perform wireless communication with the wireless control node 10B. Note that the zone control nodes 20A do not perform direct wireless communication but perform wireless communication via the wireless control nodes 10B. As described above, the topology of the wireless communication network constructed in the communication system 1A is a star type.

The device 30A is an in-vehicle communication device that acquires and notifies various types of information and the like. The device 30A includes, for example, a sensor such as a camera or a distance measuring device, a control device that controls an engine or the like, and a display device such as a car navigation system or a DVD. The device 30a is mounted on the vehicle C1, for example, and includes a device for acquiring information for performing automated driving and performing control, and a device for presenting entertainment, a vehicle status, and the like to a user who gets on the vehicle C1.

The device 30A is provided in each region (zone) obtained by dividing the vehicle C1 into a plurality of regions. A plurality of devices 30A can be provided in one zone. The device 30A is connected to the zone control node 20A corresponding to each region via a cable, and performs wired communication with the zone control node 20A.

The device 30A communicates with other devices (for example, other devices 30A, other zone control nodes 20A, the central control node 10A, and the wireless control node 10B) via the zone control node 20A.

As illustrated in FIG. 2, the zone control node 20A performs both wired communication and wireless communication, whereby redundancy of communication in the communication system 1A can be secured.

### (Tree Type)

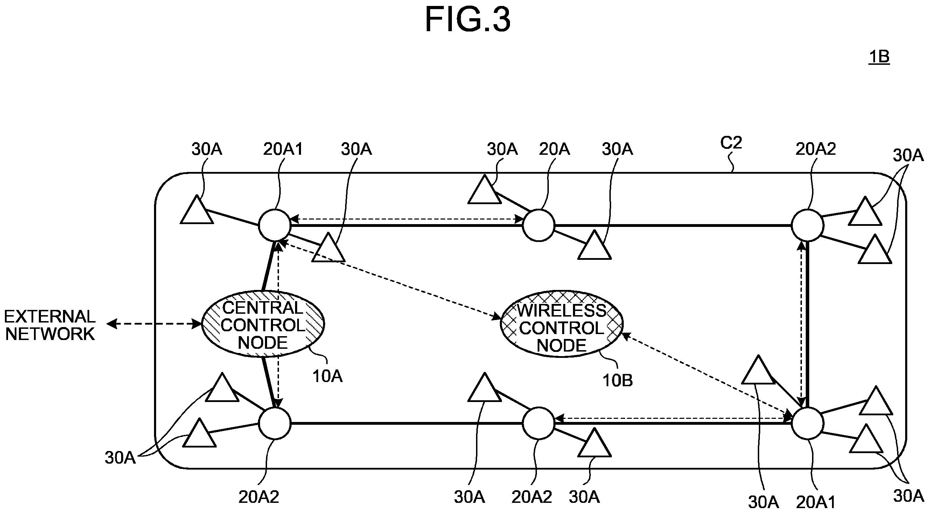

In FIG. 2, the topology of the wireless communication network is a star type, but is not limited thereto. For example, the topology of the wireless communication network may be a tree type. Such a case will be described with reference to FIG. 3.

FIG. 3 is a diagram illustrating an example of a schematic configuration of a communication system 1B according to an embodiment of the present disclosure. As illustrated in FIG. 3, the communication system 1B according to the present embodiment is provided in a vehicle C2.

The wireless control node 10B illustrated in FIG. 3 is different from the communication system 1A of FIG. 2 in that direct wireless communication is performed with zone control nodes 20A1, but direct wireless communication is not performed with zone control nodes 20A2.

The zone control nodes 20A1 perform direct wireless communication with the wireless control node 10B and the zone control nodes 20A2.

The zone control nodes 20A2 perform direct wireless communication with the zone control nodes 20A1. The zone control nodes 20A2 do not perform direct wireless communication with the wireless control node 10B, but performs wireless communication with the wireless control node 10B via the zone control nodes 20A1.

As described above, the communication system 1B according to an embodiment of the present disclosure may perform wireless communication via the tree type wireless communication network.

### <2.1.2. Direct Wireless Communication Between Zone Control Nodes>

In the communication systems 1A and 1B, the zone control nodes 20A perform wireless communication via the wireless control node 10B, but the present invention is not limited thereto. For example, the zone control nodes 20A may directly perform wireless communication with each other.

### (Mesh Type and Full Connection Type)

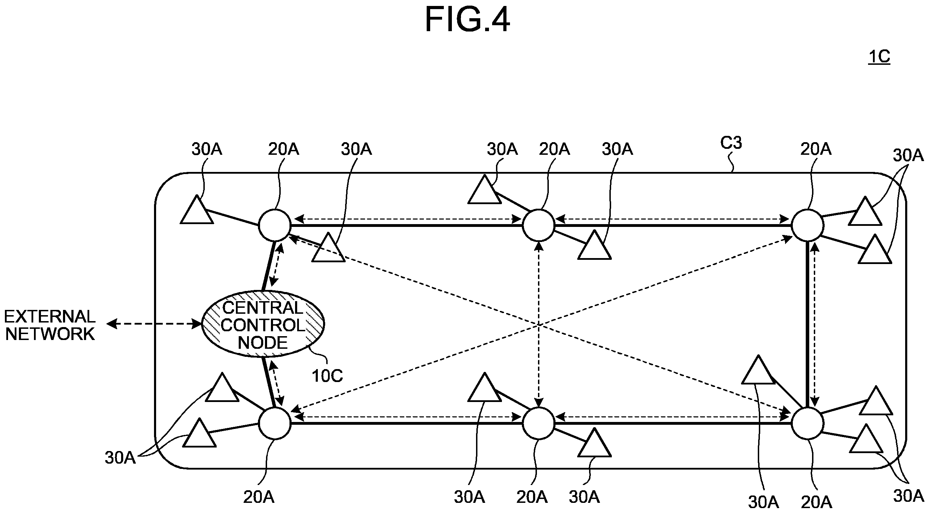

FIG. 4 is a diagram illustrating an example of a schematic configuration of a communication system 1C according to an embodiment of the present disclosure. As illustrated in FIG. 4, the communication system 1C according to the present embodiment is provided in a vehicle C3.

The communication system 1C illustrated in FIG. 4 is different from the communication systems 1A and 1B illustrated in FIGS. 2 and 3 in that the wireless control node 10B is not provided. Furthermore, the communication system 1C includes a central control node 10C instead of the central control node 10A illustrated in FIGS. 2 and 3.

The zone control nodes 20A illustrated in FIG. 4 perform wireless communication with other zone control nodes 20A. In addition, the zone control nodes 20A perform wireless communication with the central control node 10C. In the example of FIG. 4, the communication system 1C performs wireless communication via the mesh type wireless communication network.

Note that, here, a case where each zone control node 20A performs wireless communication with three nodes is illustrated, but the zone control nodes 20A may perform wireless communication with a plurality of nodes. For example, each zone control node 20A may wirelessly communicate with all zone control nodes 20A. In this manner, the communication system 1C may perform wireless communication via the full connection type wireless communication network.

### (Ring Type)

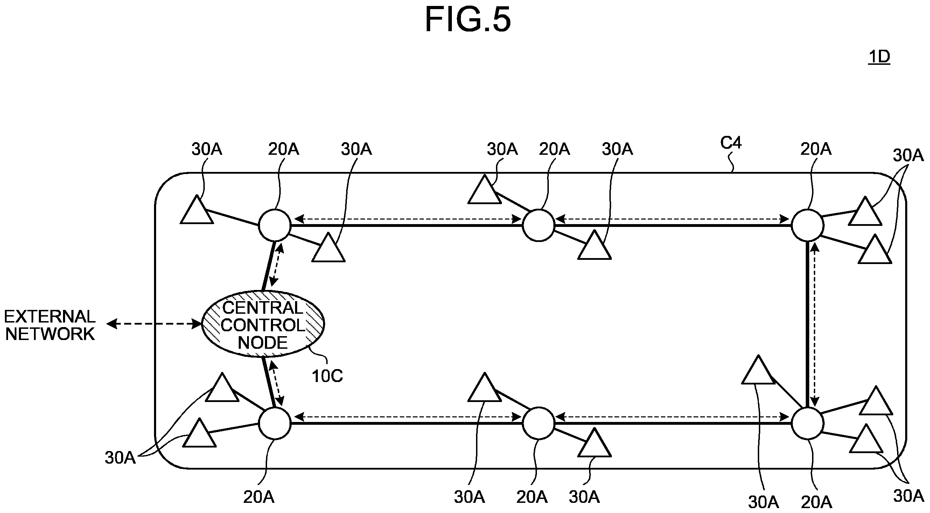

In FIG. 4, the topology of the wireless communication network is a mesh type or a full connection type, but the topology is not limited thereto. For example, the topology of the wireless communication network may be the same ring type as the wired network. Such a case will be described with reference to FIG. 5.

FIG. 5 is a diagram illustrating an example of a schematic configuration of a communication system 1D according to an embodiment of the present disclosure. As illustrated in FIG. 5, the communication system 1D according to the present embodiment is provided in a vehicle C4.

The zone control nodes 20A illustrated in FIG. 5 perform wireless communication with the zone control nodes 20A connected by the backbone cable, for example. That is, the zone control nodes 20A also perform direct wireless communication with other zone control nodes 20A that perform direct wired communication.

As described above, as in the communication system 1D, the topology of the wireless communication network and the topology of the wired communication network may be the same.

### <2.2. Wireless Communication Between Devices>

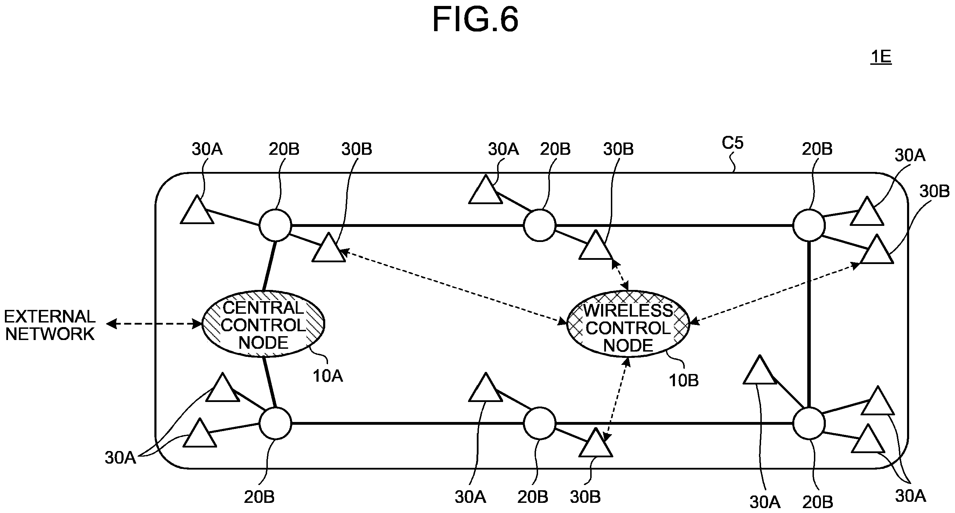

In the communication systems 1A to 1D described above, the zone control nodes 20A perform wireless communication, but the present invention is not limited thereto. For example, a devices 30B may perform wireless communication. Such a case will be described with reference to FIGS. 6 to 8.

### <2.2.1. Wireless Communication via Wireless Control Node>

### (Star Type)

First, an example of a schematic configuration of a communication system 1E to which the proposed technology is applied will be described with reference to FIG. 6. FIG. 6 is a diagram illustrating an example of a schematic configuration of the communication system 1E according to an embodiment of the present disclosure. As illustrated in FIG. 6, the communication system 1E according to the present embodiment is provided in a vehicle C5.

The communication system 1E according to the present embodiment includes zone control nodes 20B instead of the zone control nodes 20A. Furthermore, the communication system 1E further includes devices 30B in addition to the devices 30A.

The zone control nodes 20B are different from the zone control nodes 20A of FIGS. 2 to 5 in performing wired communication and not performing wireless communication. In addition, the devices 30B perform wireless communication with the wireless control node 10B. In the example of FIG. 6, the devices 30B do not perform direct wireless communication but perform wireless communication via the wireless control node 10B. As described above, the topology of the wireless communication network constructed in the communication system 1E is a star type.

### (Tree Type)

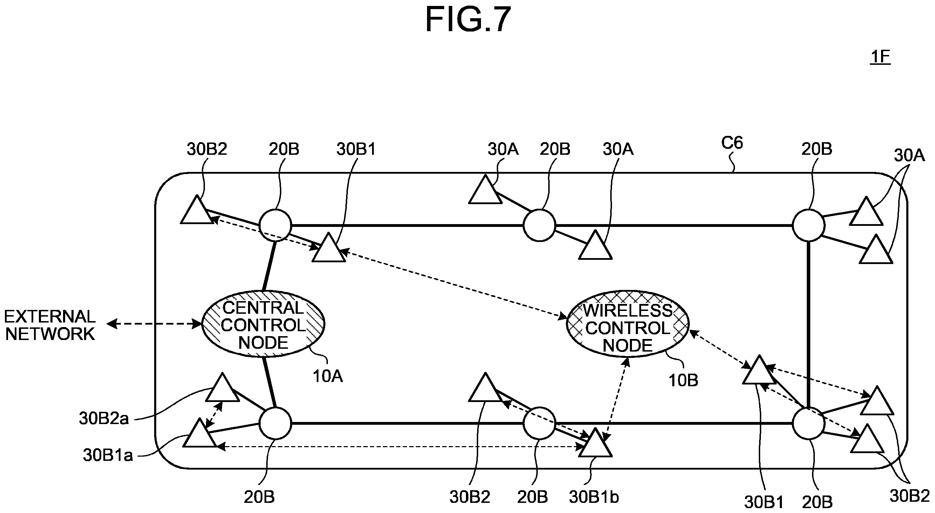

In FIG. 6, the topology of the wireless communication network is a star type, but is not limited thereto. For example, the topology of the wireless communication network may be a tree type. Such a case will be described with reference to FIG. 7.

FIG. 7 is a diagram illustrating an example of a schematic configuration of a communication system 1F according to an embodiment of the present disclosure. As illustrated in FIG. 7, the communication system 1F according to the present embodiment is provided in a vehicle C6.

The wireless control node 10B illustrated in FIG. 7 is different from the communication system 1E of FIG. 6 in that the wireless control node 10B performs direct wireless communication with devices B1 but does not perform direct wireless communication with devices B2.

The devices B1 perform direct wireless communication with the wireless control node 10B and the devices B2. The devices B2 perform direct wireless communication with the devices B1. The devices B2 do not directly perform wireless communication with the wireless control node 10B, but performs wireless communication with the wireless control node 10B via the devices B1.

Note that the device B2 may perform wireless communication with the wireless control node 10B via one or more devices B1. The example of FIG. 7 illustrates a case where a device B2a is connected to the wireless control node 10B via two devices 30B1a and 30B1b.

As described above, the communication system 1F according to an embodiment of the present disclosure may perform wireless communication via the tree type wireless communication network.

### <2.2.2. Direct Wireless Communication Between Devices>

In the communication systems 1E and 1F, the devices 30B perform wireless communication via the wireless control node 10B, but the present invention is not limited thereto. For example, the devices 30B may directly perform wireless communication with each other.

### (Mesh Type and Full Connection Type)

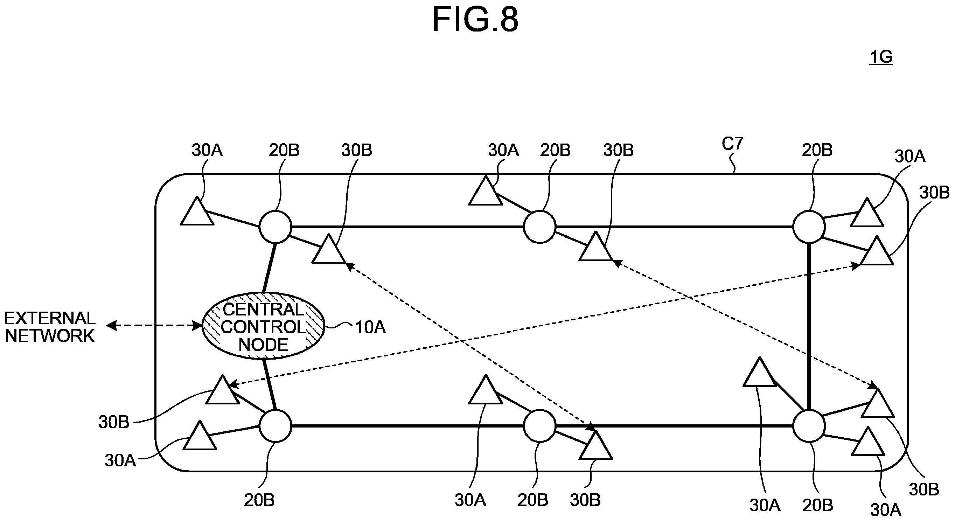

FIG. 8 is a diagram illustrating an example of a schematic configuration of a communication system 1G according to an embodiment of the present disclosure. As illustrated in FIG. 8, the communication system 1G according to the present embodiment is provided in a vehicle C7. The communication system 1G illustrated in FIG. 8 is different from the communication systems 1E and 1F illustrated in FIGS. 6 and 7 in that the wireless control node 10B is not provided.

The devices 30B illustrated in FIG. 8 perform wireless communication with other devices 30B. The communication system 1C performs wireless communication via the mesh type wireless communication network.

Note that, here, a case where each device 30B performs wireless communication with one node is illustrated, but the device 30B may perform wireless communication with a plurality of nodes. For example, each device 30B may perform wireless communication with all the devices 30B. In this manner, the communication system 1G may perform wireless communication via the full connection type wireless communication network.

### <<3. Configuration Example of In-Vehicle Communication Device>>

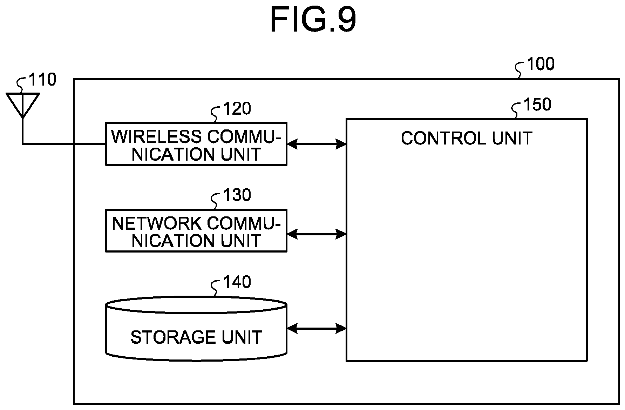

FIG. 9 is a block diagram illustrating an example of a configuration of an in-vehicle communication device 100 according to an embodiment of the present disclosure. The in-vehicle communication device 100 functions as each node or device 30 of the communication system 1. Referring to FIG. 9, the in-vehicle communication device 100 includes an antenna unit 110, a wireless communication unit 120, a network communication unit 130, a storage unit 140, and a control unit 150.

### (1) Antenna Unit 110

The antenna unit 110 radiates a signal output from the wireless communication unit 120 into space as a radio wave. Furthermore, the antenna unit 110 converts a radio wave in space into a signal and outputs the signal to the wireless communication unit 120. Note that the antenna unit 110 of the present embodiment includes a plurality of antenna elements and can form a beam.

### (2) Wireless Communication Unit 120

The wireless communication unit 120 transmits and receives signals. For example, the wireless communication unit 120 transmits a signal to another device and receives a signal from another device.

For example, in a case where the in-vehicle communication device 100 functions as the central control node 10A or 10C, the wireless communication unit 120 communicates with a base station and other vehicles via an external network. In addition, in a case where the in-vehicle communication device 100 functions as the wireless control node 10B, the wireless communication unit 120 communicates with the zone control nodes 20A. In a case where the in-vehicle communication device 100 functions as the zone control node 20A, the wireless communication unit 120 communicates with the wireless control node 10B and other zone control nodes 20A. In a case where the in-vehicle communication device 100 functions as the device 30B, the wireless communication unit 120 communicates with the wireless control node 10B and other devices 30B.

The wireless communication unit 120 can communicate with an external network by forming a plurality of beams by the antenna unit 110.

### (3) Network Communication Unit 130

The network communication unit 130 transmits and receives information. For example, the network communication unit 130 transmits information to another in-vehicle communication device 100 and receives information from another in-vehicle communication device. For example, in a case where the in-vehicle communication device 100 functions as the central control node 10A or 10C, the network communication unit 130 communicates with the zone control nodes 20 via the backbone cable. In a case where the in-vehicle communication device 100 functions as the zone control node 20, the network communication unit 130 communicates with the central control node 10A or 10C, and other zone control nodes 20 and devices 30. In a case where the in-vehicle communication device 100 functions as the device 30, the network communication unit 130 communicates with the zone control nodes 20.

### (4) Storage Unit 140

The storage unit 140 temporarily or permanently stores programs and various data for the operation of the in-vehicle communication device 100.

### (5) Control Unit 150

The control unit 150 is a controller that controls each unit of the in-vehicle communication device 100. The control unit 150 is realized by, for example, a processor such as a CPU or an MPU. For example, the control unit 150 is realized by the processor executing various programs stored in a storage device inside the in-vehicle communication device 100 using a RAM or the like as a work area. Note that the control unit 150 may be realized by an integrated circuit such as an ASIC or an FPGA. Any of the CPU, the MPU, the ASIC, and the FPGA can be regarded as a controller.

Note that, in a case where the in-vehicle communication device 100 functions as a node that performs wireless communication but does not perform wired communication such as the wireless control node 10B, the network communication unit 130 described above may be omitted. Furthermore, in a case where the in-vehicle communication device 100 functions as a node that performs wired communication without performing wireless communication, such as the zone control node 20B and the device 30A, the antenna unit 110 and the wireless communication unit 120 described above may be omitted.

Furthermore, in a case where the in-vehicle communication device 100 functions as the device 30 that is, for example, a sensor that acquires information inside and outside the vehicle, the in-vehicle communication device 100 may include a sensor unit (not illustrated) that acquires the information. Furthermore, in a case where the in-vehicle communication device 100 is the device 30 that presents information to the user such as a car navigation system, the in-vehicle communication device may include an input/output unit (not illustrated). As described above, the in-vehicle communication device 100 can have a configuration corresponding to a function to be realized.

### <<4. Details of Wireless Communication>>

Next, details of wireless communication by the communication system 1 according to an embodiment of the present disclosure will be described.

### <4.1. Wireless Communication via Wireless Control Node>

As described above, in the communication systems 1A, 1B, 1E, and 1F, wireless communication is performed via the wireless control node 10B. In this case, the wireless control node 10B controls wireless communication in the communication system 1. For example, the wireless control node 10B performs control such as resource allocation of wireless communication in the communication system 1.

### (Uu Link Communication)

The control of the wireless communication by the wireless control node 10B may be the same as the control in the existing wireless communication system. For example, the wireless control node 10B performs Uu link communication in 3GPP. The Uu link communication is communication between a base station and a UE, and in the present embodiment, the wireless control node 10B operates as a base station, and a communication partner of the wireless control node 10B (for example, the zone control node 20A or the device 30B) functions as the UE. Note that details of Uu link communication in 3GPP are described in 3GPP TS38.300 and the like.

### (Sidelink Communication)

In addition, the wireless control node 10B may perform sidelink communication (PC5 communication) in 3GPP. In this case, the wireless control node 10B performs sidelink communication with a node (hereinafter, also referred to as a communication node) which is a communication partner. The wireless control node 10B controls the sidelink communication. Note that details of sidelink communication in 3GPP are described in 3GPP TS38.300 and the like.

### (Integrated Access and Backhaul (IAB))

For example, in a case where the wireless communication network is a tree type as in the communication systems 1B and 1F, an intermediate node may operate as an IAB node. In this case, the intermediate node (for example, the zone control node 20A1 or the device 30B1) operates as a UE for a higher node (for example, the wireless control node 10B). In addition, the intermediate node operates as a base station for a lower node (for example, the zone control node 20A2 or the device 30B2). Note that details of IAB are described in 3GPP TS38.300 and the like.

### <4.2. Direct Wireless Communication Between Nodes>

As described above, in the communication systems 1C, 1D, and 1G, each communication node (for example, the zone control node 20A and the device 30B) directly performs wireless communication without passing through the wireless control node 10B. In this case, the communication node performs direct communication using predetermined radio resources (time and frequency resources).

Here, the predetermined radio resources are, for example, resources set in advance. Such setting is performed, for example, when a wireless communication network is installed in the in-vehicle LAN.

Alternatively, the predetermined radio resources may be managed by the central control node 10A or 10C. In this case, the central control nodes 10A and 10C dynamically or semi-statically set predetermined radio resources for each communication node (for example, the zone control node 20A and the device 30B). Note that the wireless control node 10B that manages radio resources may be provided instead of the central control nodes 10A and 10C.

Furthermore, the communication node may perform sensing, listen before talk (LBT), or the like before transmission, measure a resource usage status, and then select an empty resource to perform transmission.

Here, an existing wireless communication scheme may be used for direct wireless communication between communication nodes. For example, the communication nodes perform sidelink communication in 3GPP. In this case, the communication node on the transmission side performs sensing before transmission, measures the resource usage status, and then selects an empty resource to perform transmission.

Note that the radio resource on which the communication node performs sensing and the radio resource available for transmission may be set in advance, or may be dynamically or semi-statically set by the central control node 10A or 10C or the like.

Note that the wireless communication method described above is an example. The communication system 1 can use various wireless communication methods such as WiFi (registered trademark), dedicated short range communication (DSRC), and IEEE802.11p.

In addition, the communication system 1 may use wireless communication using a licensed band and an unlicensed band together. Generally, communication in the licensed band can obtain higher communication quality than communication in the unlicensed band. Utilizing this feature, the communication system 1 may perform wireless communication by switching the licensed band and the unlicensed band or by using them in combination. In the case of 3GPP, the communication system 1 can use, for example, NR-U or the like.

### <<5. Redundancy by Wireless Communication and Wired Communication>>

As described above, the communication system 1 according to an embodiment of the present disclosure performs communication redundancy by performing wireless communication and wired communication. Hereinafter, a method of controlling wireless communication and wired communication for communication redundancy will be described.

Note that a case where the communication system 1 performs wireless communication and wired communication by sharing information regarding control between wireless communication and wired communication, for example, and a case where the communication system 1 performs wireless communication and wired communication without sharing information regarding control are considered. Hereinafter, a case where information regarding control is shared will be described as a case where wired communication and wireless communication are in cooperation with each other, and a case where information regarding control is not shared will be described as a case where wired communication and wireless communication are independent from each other. Hereinafter, "independent" does not include a case where the wired communication network and the wireless communication network are completely independent from each other and do not affect each other at all.

### <5.1. Cooperation by Wireless Communication and Wired Communication>

For example, by connecting the central control node 10A or 10C and the wireless control node 10B in a wired or wireless manner, the wireless communication network and the wired communication network can communicate in cooperation with each other. In this case, the central control node 10A or 10C or the wireless control node 10B control communication in the wireless communication network and the wired communication network.

As described above, the method of performing cooperation by wireless communication and wired communication is suitable for a system that performs wireless communication via the wireless control node 10B, such as the communication systems 1A, 1B, 1E, and 1F described above.

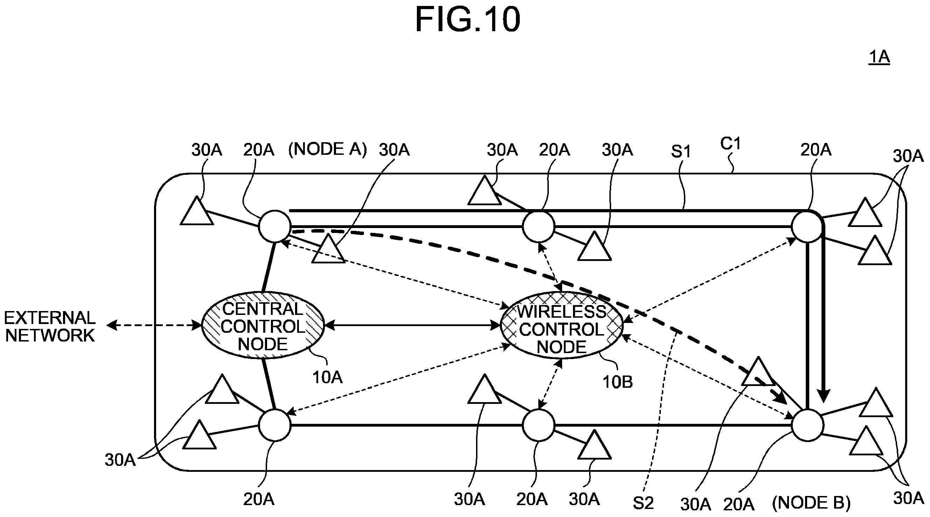

FIG. 10 is a diagram for explaining an example of communication according to an embodiment of the present disclosure. Note that although the communication system 1A will be described as an example in FIG. 10, but the same applies to the other communication systems 1B, 1E, and 1F.

As illustrated in FIG. 10, the central control node 10A and the wireless control node 10B are connected by wire, and cooperate with each other with respect to control of communication in each network. For example, the central control node 10A and the wireless control node 10B use information shared with each other to set control information for controlling each network.

Here, a zone control node 20A arranged at a corner portion (upper left in FIG. 10) of the vehicle C1 among the plurality of zones illustrated in FIG. 10 is defined as a node A. In addition, a zone control node 20A arranged in a zone (lower right in FIG. 10) diagonal to the node A among the plurality of zones is set as a node B. Hereinafter, a case where the node A transmits data to the node B will be described.

In this case, the node A may transmit data using both wired and wireless communication networks (see S1 and S2 in FIG. 10). Data transmitted in each network is controlled by the central control node 10A. Note that such control may be performed by the wireless control node 10B or both the central control node 10A and the wireless control node 10B.

### [Switching of Used Network]

The central control node 10A controls the nodes A and B or the entire network to use at least one of wired communication and wireless communication according to a predetermined state such as a communication environment.

### (Predetermined State Example)

### (Failure/Unauthorized Intrusion)

Examples of the predetermined state include a case where a failure occurs in a wired communication network or a wireless communication network (hereinafter, also simply referred to as a network), and a case where intrusion from the outside is detected.

The central control node 10A monitors, for example, a network and determines whether or not to detect a detected event as failure occurrence or unauthorized intrusion in consideration of a degree of influence in a case where the event occurs, a probability of occurrence, and the like.

Alternatively, the central control node 10A may detect a failure or an unauthorized intrusion (unauthorized access) by using big data analysis. The central control node 10A acquires various data regarding occurrence of a failure or unauthorized intrusion in the network. The central control node 10A performs analysis by AI using the acquired data. The central control node 10A uses the analysis result to determine whether or not an event detected on the network in the vehicle C1 is detected as failure occurrence or unauthorized intrusion.

Note that the failures here include threats related to human operations. This threat includes unapproved or inadvertent software updates, configuration errors, program errors, data corruption by operators and users, and the like.

### (Dangerous Situation)

Examples of the predetermined state include a state that may cause danger to the vehicle C1. For example, there are a case where a traffic accident occurs in front of the vehicle C1 and a case where earthquake early warning is received as a state in which there is a possibility of danger. For example, in a case where a traffic accident is detected by a camera or the like, or in a case where information regarding a traffic accident or earthquake early warning is received, the central control node 10A determines that there is a possibility of endangering the vehicle C1.

### (Communication Data Amount)

Examples of the predetermined state include a state of the amount of data (traffic amount) exchanged on the network. The central control node 10A determines that the state is the predetermined state, for example, in a case where the amount of data communicated on the network has increased to a threshold or more (alternatively, in a case where it has decreased to less than the threshold).

### (Communication Switching Example)

### (Use One Network)

For example, in a case where determining that the state of the network is the predetermined state, the central control node 10A switches to communication in one of the wired communication network and the wireless communication network. For example, the central control node 10A stops using the network determined to be in the predetermined state.

Specifically, for example, in a case of detecting a failure or an intrusion from the outside in the wired communication network, the central control node 10A stops using the wired communication network and switches to communication in the wireless communication network. In addition, in a case of detecting a failure or an intrusion from the outside in the wireless communication network, the central control node 10A (or the wireless control node 10B) stops using the wireless communication network and switches to communication in the wired communication network.

### (Use Both Networks)

For example, in a case of determining that the state of the network is the predetermined state, the central control node 10A transmits important information regarding the predetermined state using both the wired communication network and the wireless communication network. Examples of the important information regarding the predetermined state include information for notifying the state (for example, a dangerous state), information regarding processing for starting or reducing the state, and the like.

As described above, the central control node 10A transmits the information regarding the predetermined state using both networks, so that it is possible to improve reliability of the information to be transmitted.

### (Switching According to Type of Data)

The central control node 10A switches the network to be used for each type of data to be transmitted according to a predetermined state. For example, in a case where the amount of data in the in-vehicle LAN increases beyond the threshold, the central control node 10A performs control to perform wireless communication for data with low importance and perform wired communication for data with high importance. Examples of the data with low importance include data related to entertainment such as video data of television. In addition, examples of data with high importance include data related to a vehicle control system.

As described above, the congestion of the wired communication network can be reduced by switching the network used by the central control node 10A according to the importance of the transmission data. As a result, the communication system 1A can further reduce the latency and increase the reliability of transmission of data with high importance.

### [Determination of Transmission Parameter and Transmission Method]

The central control node 10A determines a transmission parameter and a transmission method regarding data to be transmitted in at least one of wired communication and wireless communication.

For example, the transmission parameters determined by the central control node 10A include modulation schemes such as QPSK and 16QAM, an error correction code coding rate, time and frequency resources for transmission, transmission power, transmission timing, and the like.

### [Combination/Switching of Wireless Communication]

In addition, in a case where communication is performed using a wired communication network, the central control node 10A executes combination or switching with a wireless communication network according to a condition. Such combination or switching of the wireless communication network may be executed for each zone, or may be executed as communication in the entire vehicle C1.

### (Setting)

For example, the central control node 10A uses wireless communication in combination with wired communication on the condition that combination of wireless communication and wired communication is set (configured). The combination with the wireless communication may be set in advance (preconfigure) or may be set (configured) by software update or the like, for example.

### (Geographic Information)

In addition, the central control node 10A may determine whether or not to perform wireless communication by using geographical information or position information of the vehicle C1. For example, in a case where the vehicle C1 travels in an area with many other vehicles or people such as an urban area, the amount of data exchanged in the in-vehicle LAN may be increased, and the central control node 10A may also use wireless communication.

Furthermore, the central control node 10A may change the type of wireless communication to be used and the configuration of the communication parameters including the above-described transmission parameters according to the geographical information and the position information of the vehicle C1.

### (Traffic)

The central control node 10A may execute combination or switching of wireless communication on condition that the traffic of wired communication is equal to or greater than a preset threshold. For example, in a case where the central control node 10A determines that the traffic of the wired communication is equal to or more than the threshold and the QoS of a specific packet cannot be satisfied, the central control node uses the wireless communication together or switches to the wireless communication.

The traffic of the wired communication may be measured over the entire wired communication network of the vehicle C1 or may be measured for each predetermined zone.

### (Packet Type)

The central control node 10A may execute combination or switching of wireless communication according to the type of transmission packet (data). In a case where the transmission packet is a predetermined packet, the central control node 10A executes combination or switching of wireless communication. An example of the predetermined packet is, for example, a packet having a particularly high QoS such as a control system.

### <5.2. Wireless Communication and Wired Communication Are Independent>

For example, wireless communication and wired communication can be controlled independently of each other. Here, in the "mutually independent" networks according to the present embodiment, each of the devices 30 and the nodes can be connected to both the wireless communication network and the wired communication network, and can transmit and receive data via each of the networks. That is, even in a case where the networks according to the present embodiment are "mutually independent", the devices 30 and the nodes can access both networks. That is, "independent" according to the present embodiment is different from "completely independent" in which the devices 30 or the nodes access only one network.

As described above, in the communication system 1, the central control node 10A or 10C is connected to an external network. Therefore, by preventing the central control node 10A or 10C from being connected to the wireless communication network in the vehicle, in other words, by connecting to the external network by wired communication and not connecting to the external network by wireless communication, robustness in wireless communication of the in-vehicle LAN can be made very high.

The method for making wireless communication and wired communication independent described here is suitable for the communication systems 1C, 1D, and 1G that perform wireless communication not via the wireless control node 10B described above.

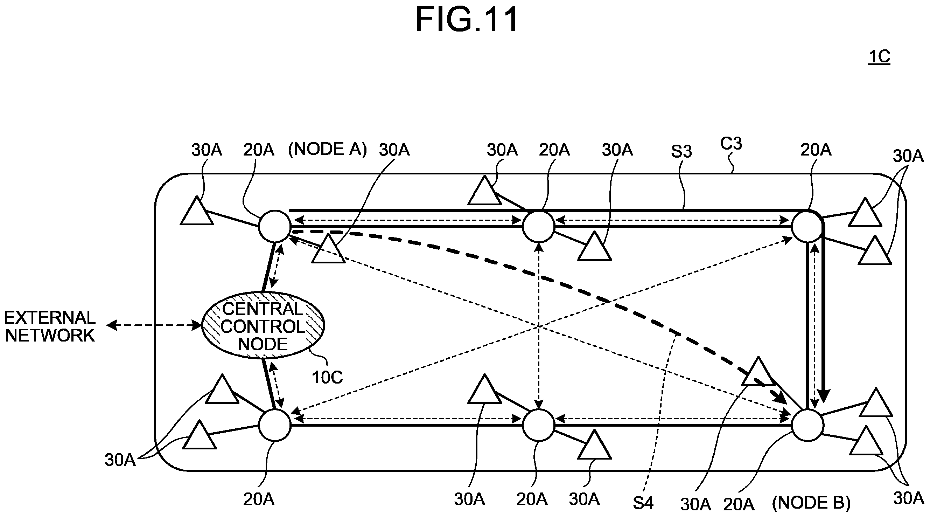

FIG. 11 is a diagram for explaining an example of communication according to an embodiment of the present disclosure. Note that, in FIG. 11, the communication system 1C will be described as an example, but the same applies to the other communication systems 1D and 1G. The wireless communication network and the wired communication network of the communication system 1C according to the present embodiment are independent of each other. Therefore, control information for performing wireless communication is set in the wireless communication network, and control information for performing wired communication is set in the wired communication network. In addition, it is assumed that information for setting control information is not shared between the wired communication network and the wireless communication network.

Here, it is assumed that data is transmitted from the upper left zone control node 20A (node A) in FIG. 11 to the lower right zone control node 20A (node B).

In this case, the node A may transmit data using both wired and wireless communication networks (see S3 and S4 in FIG. 11). Data to be transmitted in each network is controlled by the node A (that is, a transmission node) or the node B (that is, a reception node).

### [Switching of Used Network]

The node A or the node B (hereinafter, also referred to as a communication node) switches the communication mode to use at least one of wired communication and wireless communication according to a predetermined state such as a communication environment. Note that specific examples of the predetermined state and the communication switching are the same as the case of cooperation by the wireless communication and the wired communication described above.

### [Determination of Transmission Parameter and Transmission Method]

The communication node determines a transmission parameter and a transmission method regarding data to be transmitted in at least one of wired communication and wireless communication. Details of processing in a case where the communication node transmits data by both wired communication and wireless communication and processing in a case where the communication node receives data by both wired communication and wireless communication will be described later.

### [Combination/Switching of Wireless Communication]

In addition, in a case of performing communication using the wired communication network, the communication node executes combination or switching with the wireless communication network according to a condition. Such combination or switching of the wireless communication network may be executed for each zone, or may be executed as communication in the entire vehicle C1. Note that the switching conditions are the same as those in the case of cooperation by the wireless communication and the wired communication described above.

### <<6. Communication Processing>>

Next, communication processing in a case where data is transmitted by both wired communication and wireless communication will be described. The type of data to be transmitted by both wired communication and wireless communication is not particularly limited, and all data are to be transmitted.

### <6.1. Transmission Processing>

First, processing in a case where data is transmitted by wired communication and wireless communication will be described. Such processing is executed, for example, in the transmission node (node A).

### [In Case Where Transmission Data Is Same in Wired and Wireless Communication]

### (Transmission Timing)

The transmission node transmits the same transmission data by both wired communication and wireless communication. The transmission timing may be the same or different between wired communication and wireless communication.

For example, in a case where the transmission data is transmitted at different timings, the transmission node may transmit the transmission data by one of wired communication and wireless communication in a case where the transmission data is transmitted for the first time, and may transmit the transmission data by the other in a case of retransmission. The transmission node determines a network to be used for transmission of the transmission data, for example, according to the information amount and the priority of the transmission data. For example, in a case where the information amount (data) of the transmission data is large, the transmission node first performs the first transmission by wireless communication and performs the retransmission by wired communication.

### (Transmission Data)

The transmission node transmits first data and second data corresponding to one transmission data by wireless communication and wired communication, respectively. The first data and the second data may be the same data or different data.

That is, the transmission node transmits one transmission data by wired communication and wireless communication.

Alternatively, the transmission node may perform first transmission processing on one piece of transmission data to generate first data to be transmitted by wired communication, and perform second transmission processing on the transmission data to generate second data to be transmitted by wireless communication.

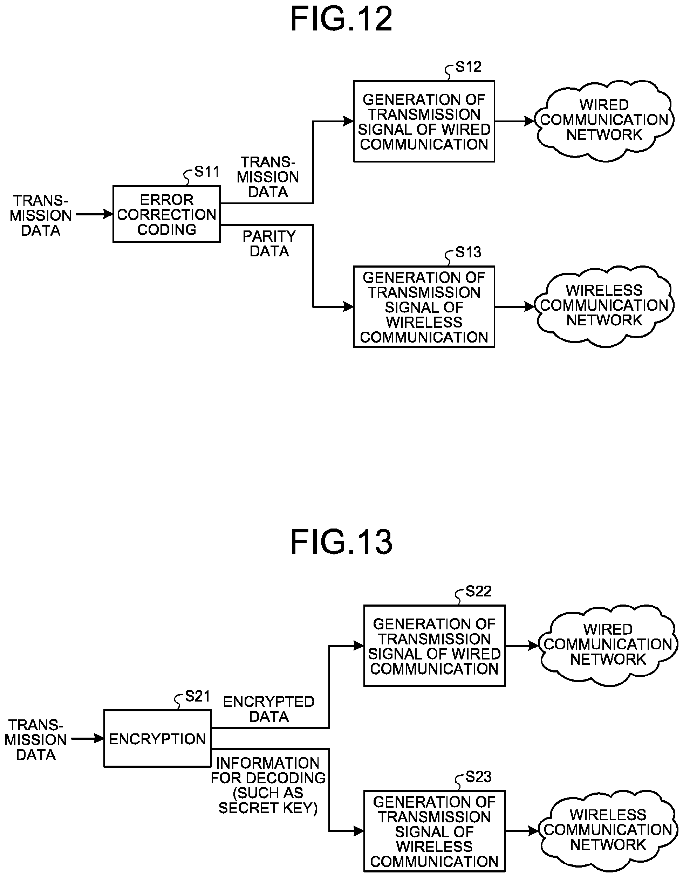

Further, the transmission node may set the transmission data as the first data and set the data generated based on the transmission data as the second data. An example of such a case will be described with reference to FIG. 12.

### (Error Correction Coding Processing)

FIG. 12 is a diagram for explaining an example of transmission processing according to an embodiment of the present disclosure.

As illustrated in FIG. 12, first, the transmission node performs error correction coding processing on the transmission data (step S11). Next, the transmission node performs signal processing on the transmission data, generates a transmission signal of wired communication (step S12), and transmits the transmission signal to the reception node via the wired communication network.

In addition, the transmission node performs signal processing on the parity data generated by the error correction coding processing to generate a transmission signal of wireless communication (step S13). The transmission node transmits the generated transmission signal to the reception node via the wireless communication network.

For example, the transmission node may transmit transmission data of different redundancy versions (RVs) in 3GPP by wired communication and wireless communication.

As described above, the transmission node transmits the transmission data and the parity data in different networks, so that the transmission node can more reliably transmit the transmission data and the information for reducing the error rate of the transmission data. As a result, the communication system 1 can further improve the reliability of the transmission data.

### (Encryption Processing)

In the above example, the transmission node performs the error correction coding processing on the transmission data, but the present invention is not limited thereto. For example, the transmission node may perform encryption processing. Such a case will be described with reference to FIG. 13.

FIG. 13 is a diagram for explaining another example of the transmission processing according to an embodiment of the present disclosure.

As illustrated in FIG. 13, first, the transmission node performs encryption processing on the transmission data (step S21). Next, the transmission node performs signal processing on the encrypted transmission data (encrypted data), generates a transmission signal for wired communication (step S22), and transmits the transmission signal to the reception node via the wired communication network.

In addition, the transmission node performs signal processing on information for decoding the encrypted data (for example, information such as a secret key) to generate a transmission signal of wireless communication (step S23). The transmission node transmits the generated transmission signal to the reception node via the wireless communication network.

In this manner, the transmission node transmits the transmission data (for example, encrypted data) and the information for determining whether or not the transmission data is correctly transmitted (information for decoding) in different networks. As a result, the communication system 1 can further improve the robustness and confidentiality of the system.

Note that the encryption processing performed by the transmission node can include, for example, an encryption processing to which quantum encryption or blockchain technology is applied.

### [In Case Where Transmission Data Is Different Between Wired and Wireless Transmission Data]

In the above-described example, the transmission node performs signal processing on one piece of transmission data and transmits the transmission data in different networks, but the present invention is not limited thereto. The transmission nodes may transmit different transmission data in different networks. For example, the transmission node selects at least one of the wireless communication network and the wired communication network according to the type of the transmission data and transmits the transmission data.

For example, in the case of zone architecture, communication of a plurality of types of data may occur between zones in which ECUs are disposed. As described above, in the zone architecture, there is a possibility that the load of a transmission path between predetermined zones is temporarily high.

In this case, the transmission node selects a network according to, for example, the type of transmission data (for example, QoS of the transmission data).

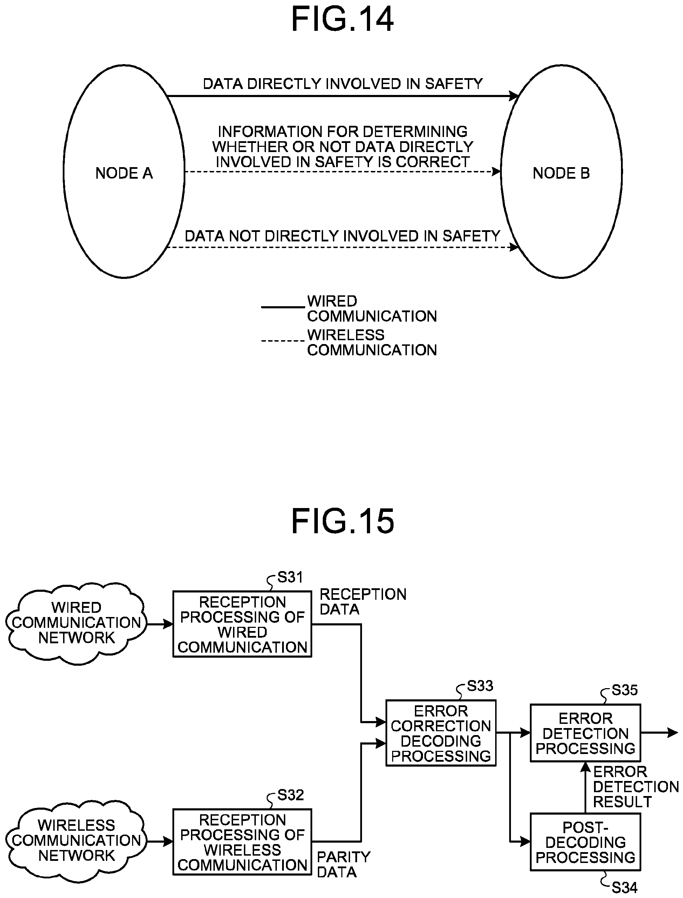

FIG. 14 is a diagram for explaining selection of a network by a transmission node according to an embodiment of the present disclosure.

For example, the transmission node (node A) selects a network according to whether or not the transmission data is data directly involved in safety (for example, QoS is very high). More specifically, the node A which is a transmission node transmits data directly involved in safety by using wired communication. In addition, the node A transmits information for determining whether or not data directly involved in safety has been correctly transmitted by using wireless communication. The node A transmits data not directly involved in safety by using wireless communication.

Here, examples of the data directly involved in safety include control system data and data notifying a dangerous state. Furthermore, examples of the information for determining whether or not the data directly involved in safety has been correctly transmitted include information such as the parity data and the secret key described above. Examples of the data not directly involved in safety include information regarding audio and entertainment, information regarding a device mounted on the vehicle C such as an air conditioner, and the like.

In this manner, the transmission node selects a network to be used according to the type of transmission data. As a result, the communication system 1 can transmit data more reliably.

### <6.2. Reception Processing>

Next, processing in a case where data is received by wired communication and wireless communication will be described. Such processing is executed, for example, in the reception node (node B).

### (Error Correction Decoding Processing)

As described above, the reception processing by the reception node in a case where the transmission node transmits the transmission data and the parity data in different networks will be described. FIG. 15 is a diagram for explaining an example of reception processing according to an embodiment of the present disclosure.

As illustrated in FIG. 15, the reception node first performs reception processing of wired communication on a reception signal received via the wired communication network (step S31), and generates data. Furthermore, the reception node performs reception processing of wireless communication on a reception signal received via the wireless communication network (step S32), and generates parity data.

The reception node performs error correction decoding processing on the generated data using the parity data (step S33). The reception node performs error detection processing (step S34).

Subsequently, the reception node performs post-decoding processing on the data subjected to the error correction decoding processing by using an error detection result in the error detection processing (step S35).

In this manner, the reception node receives the reception data and the parity data via different networks. Accordingly, the communication system 1 can further improve the reliability of the reception data.

### (Decoding Processing of Encryption Processing)

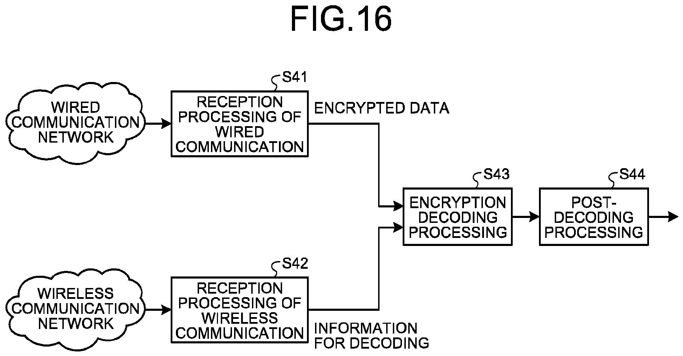

As described above, reception processing by the reception node in a case where the transmission node transmits encrypted data and information for decoding in different networks will be described. FIG. 16 is a diagram for explaining another example of the reception processing according to an embodiment of the present disclosure.

As illustrated in FIG. 16, the reception node first performs reception processing of wired communication on a reception signal received via the wired communication network (step S41), and generates encrypted data. Furthermore, the reception node performs reception processing of wireless communication on a reception signal received via the wireless communication network (step S42), and generates information for decoding (for example, a secret key).

The reception node performs encryption decoding processing on the generated encrypted data using information for decoding (step S43). The reception node performs post-decoding processing on the decoded data (step S44) .

In this manner, the reception node receives the encrypted data and the information (information for decoding) for determining whether or not the encrypted data has been correctly transmitted via different networks. As a result, the communication system 1 can further improve the robustness and confidentiality of the system.

### (Reception Processing of Identical Data)

In a case where the transmission node receives the identical transmission data in both of the different networks, the reception node may preferentially perform the reception processing on the reception signal received earlier, for example.

For example, even if the transmission node transmits the transmission data via the wired communication network and the wireless communication network at the same timing, the timing at which the transmission data arrives at the reception node may be different due to a difference in the degree of congestion of the network or a processing latency.

In such a case, the reception node performs reception processing preferentially on a reception signal having an early reception timing, thereby realizing communication with lower latency. This is particularly suitable for data having a high demand for low latency.

On the other hand, in a case where the transmission node receives the identical transmission data in both different networks, processing related to reception may be performed on a reception signal received via each network to generate reception data. In this case, the reception node determines whether or not the reception data is correctly received according to whether or not the reception data received via each network is the same.

As a result, the reception node can more reliably confirm whether or not data has been correctly received, and the robustness and reliability of the communication system 1 can be further improved.

Note that the two kinds of reception processing may be performed simultaneously. For example, the reception node preferentially performs reception processing on a reception signal having an earlier reception timing, and first performs vehicle control or the like based on transmission data. Thereafter, it is determined whether the reception signal with a later reception timing is the same as the reception signal with an earlier reception timing. In a case where the reception signal having the later reception timing and the reception signal having the earlier reception timing do not match, it is determined that there is a possibility that the data has been falsified, and the vehicle control or the like that has been performed earlier is stopped. By performing such reception processing, it is possible to achieve both low latency and high reliability.

### (Processing in Case Where Reception Data Is Correct)

Next, processing in a case where the reception node correctly receives the reception data will be described. As described above, in a case where the transmission node transmits the identical transmission data in both different networks, the reception node determines that the data is correctly received in a case where the data received via each network is the same. In addition, in a case where an error is not detected in the error correction decoding processing or in a case where data is not falsified in the encryption decoding processing, the reception node determines that the data is correctly received.

In this case, the reception node notifies that the data reception has succeeded by transmitting Ack to the transmission node. It should be noted that in a case where wired communication is controlled by the central control node 10A or 10C, the transmission node may transmit Ack to the central control node 10A or 10C. Also, in a case where the wireless control node 10B is controlling wireless communication, the transmission node may transmit Ack to the wireless control node 10B. In this manner, the reception node transmits Ack to at least one of the transmission node, the central control node 10A or 10C, and the wireless control node 10B.

### (Processing in Case Where Reception Data Is Incorrect)

Next, processing in a case where the reception data is incorrect will be described. As described above, in a case where the transmission node transmits the identical transmission data in both different networks, the reception node determines that the data is not correctly received in a case where the data received via each network is different. In addition, in a case where an error is detected in the error correction decoding processing or in a case where it is determined that the data is falsified in the encryption decoding processing, the reception node determines that the data is not correctly received.

In this case, the reception node notifies that data reception has failed by transmitting Nack to the transmission node. It should be noted that in a case where the wired communication is controlled by the central control node 10A or 10C, the transmission node may transmit Nack to the central control node 10A or 10C. In addition, in a case where the wireless control node 10B controls wireless communication, the transmission node may transmit Nack to the wireless control node 10B. In this manner, the reception node transmits Nack to at least one of the transmission node, the central control node 10A or 10C, and the wireless control node 10B.

The reception node deletes the reception data determined to be incorrect. In addition, in a case where a predetermined condition is satisfied, for example, in a case where the reception data is data directly involved in safety, such as information of a control system, the reception node starts safe stop processing for safely stopping the vehicle C. That is, the reception node shifts the state of the vehicle C to the fail-safe mode. Note that the safe stop process may be started by the reception node, and for example, the central control node 10A or 10C that has received a notification from the reception node may start the safe stop processing.

In addition, the predetermined condition is not limited to the example described above, and includes a case where data cannot be received even if retransmission is repeated a predetermined number of times or more, a case where correct data cannot be received due to external unauthorized intrusion, and the like.

Note that, in a case where the transmission node transmits the identical transmission data in both different networks and the data received via each network is different, the reception node may select the data received in each network according to a predetermined method.

For example, the reception node selects data received through communication not connected to the external network as reception data, and deletes the data received through communication connected to the external network. For example, in the communication system 1 described above, the reception node deletes data received through wired communication, and uses the data received through wireless communication as reception data for subsequent processing.

As described above, the communication system 1 can further improve robustness by deleting data received by the reception node in communication connected to the external network.

Alternatively, the reception node may select data received through wired communication as reception data and delete the data received through wireless communication. In general, wired communication can perform more stable communication than wireless communication. Therefore, by using the data received by the reception node through wired communication as reception data, the data received via a more stable communication path can be used for subsequent processing.

### <<7. Other Embodiments>>

Note that, in the embodiment described above, the control of the wired communication is performed by the central control node 10A or 10C, and the control of the wireless communication is performed by the wireless control node 10B, but the present invention is not limited thereto. For example, the control of the wireless communication may be performed by the central control node 10A or 10C.

Furthermore, in the above-described embodiment, one of the zone control node 20A and the device 30B performs wireless communication, but the present invention is not limited thereto. Both the zone control node 20A and the device 30B may perform wireless communication. In addition, different devices may perform wireless communication for each zone, such as a zone in which the zone control node 20A performs wireless communication and a zone in which the device 30B performs wireless communication.

### <<8. Summary>>

Each step in the processing executed by each device in the present specification does not necessarily need to be processed in time series in the order described in the drawings. For example, each step in the processing executed by each device may be processed in an order different from the order described in the drawings, or may be processed in parallel.

In addition, it is also possible to create a computer program for causing hardware such as a CPU, a ROM, and a RAM built in each device to exhibit a function equivalent to the configuration of each device described above. Furthermore, a storage medium storing the computer program can also be provided. Furthermore, by configuring each functional block illustrated in the functional block diagram by hardware, a series of processing can be realized by hardware.

Although the preferred embodiments of the present disclosure have been described in detail with reference to the accompanying drawings, the technical scope of the present disclosure is not limited to such examples. It is obvious that a person having ordinary knowledge in the technical field of the present disclosure can conceive various changes or modifications within the scope of the technical idea described in the claims, and it is naturally understood that these also belong to the technical scope of the present disclosure.

Furthermore, the effects described in the present specification are merely illustrative or exemplary, and are not restrictive. That is, the technology according to the present disclosure can exhibit other effects obvious to those skilled in the art from the description of the present specification together with or instead of the above effects.

Note that the present technology can also have the following configurations.
(1) An in-vehicle communication device comprising:
   a wired communication unit that performs wired communication via a wired communication network constructed among a plurality of devices mounted on a vehicle;
   a wireless communication unit that performs wireless communication via a wireless communication network constructed among the plurality of devices; and
   a control unit that transmits first data corresponding to transmission data via the wired communication unit and transmit second data corresponding to the transmission data via the wireless communication unit according to a predetermined condition.
(2) The in-vehicle communication device according to (1), wherein
   the control unit
   switches communication via one network to communication via an other network in a case where there is unauthorized access to the one of the wired communication network and the wireless communication network.
(3) The in-vehicle communication device according to (1) or (2), wherein
   the control unit
   switches the communication to transmit at least part of data in a case where a traffic amount of the communication of one of the wired communication network and the wireless communication network exceeds or falls below a predetermined threshold.
(4) The in-vehicle communication device according to any one of (1) to (3), wherein
   the control unit
   sets the transmission data as one of the first data and the second data, and
   sets information obtained by performing error coding processing on the transmission data and used for error correction of the transmission data as an other of the first data and the second data.
(5) The in-vehicle communication device according to any one of (1) to (3), wherein
   the control unit
   sets encrypted data obtained by performing encryption processing on the transmission data as one of the first data and the second data, and
   sets information used to decode the encrypted data as an other of the first data and the second data.
(6) The in-vehicle communication device according to any one of (1) to (3), wherein the first data and the second data are the transmission data being same.
(7) The in-vehicle communication device according to (6), wherein
   the control unit
   transmits the first data and the second data same as the first data in a case where it is determined that a traffic condition is dangerous.
(8) The in-vehicle communication device according to any one of (1) to (7), wherein
   the control unit
   executes processing using reception data received earlier among first reception data received via the wired communication unit and second reception data received via the wireless communication unit.
(9) The in-vehicle communication device according to any one of (1) to (7), wherein
   the control unit
   determines whether or not first reception data received via the wired communication unit and second reception data received via the wireless communication unit are identical to each other.
(10) The in-vehicle communication device according to (9), wherein
   the control unit
   executes processing using one of the first reception data and the second reception data in a case where it is determined that the first reception data and the second reception data are not identical to each other.
(11) The in-vehicle communication device according to any one of (1) to (9), wherein
   the control unit
   shifts a state of the vehicle to a fail-safe mode in a case where it is determined that at least one of first reception data received via the wired communication unit and second reception data received via the wireless communication is not correctly received.
(12) The in-vehicle communication device according to any one of (1) to (11), wherein the wired communication network of a ring type is constructed in the vehicle.
(13) The in-vehicle communication device according to any one of (1) to (12), wherein a topology of the wireless communication network is same as a topology of the wired communication network.
(14) The in-vehicle communication device according to any one of (1) to (12), wherein a topology of the wireless communication network is different from a topology of the wired communication network.
(15) The in-vehicle communication device according to any one of (1) to (14), wherein
   the control unit
   performs at least one of the wired communication and the wireless communication based on control information set based on information shared by the wired communication network and the wireless communication network.
(16) The in-vehicle communication device according to any one of (1) to (14), wherein
   the control unit
   performs the wired communication based on first control information set in the wired communication network, and
   performs the wireless communication based on second control information set in the wireless communication network.
(17) A communication method comprising:
   performing wired communication via a wired communication network constructed among a plurality of devices mounted on a vehicle;
   performing wireless communication via a wireless communication network constructed among the plurality of devices; and
   transmitting first data corresponding to transmission data via the wired communication network and transmitting second data corresponding to the transmission data via the wireless communication network according to a predetermined condition.
(18) A communication system comprising:
   a zone control node disposed in a zone of a plurality of zones divided in a vehicle;
   a control node that controls communication between a plurality of the zone control nodes; and
   a device that is disposed in the zone and communicates with the zone control node corresponding to the zone, wherein
   at least one of the zone control node, the control node, and the device comprises:
      a wired communication unit that performs wired communication via a wired communication network constructed among a plurality of devices among the zone control node, the control node, and the device mounted on the vehicle;
      a wireless communication unit that performs wireless communication via a wireless communication network constructed among the plurality of devices; and
      a control unit that transmits first data corresponding to transmission data via the wired communication unit and transmits second data corresponding to the transmission data via the wireless communication unit according to a predetermined condition.

### Reference Signs List

1A to 1G COMMUNICATION SYSTEM
10A, 10C CENTRAL CONTROL NODE
10B WIRELESS CONTROL NODE
20A, 20B ZONE CONTROL NODE
30A, 30B DEVICE
100 IN-VEHICLE COMMUNICATION DEVICE
110 ANTENNA UNIT
120 WIRELESS COMMUNICATION UNIT
130 NETWORK COMMUNICATION UNIT
140 STORAGE UNIT
150 CONTROL UNIT
C1 to C7 VEHICLE

## Claims

1. An in-vehicle communication device comprising:
a wired communication unit that performs wired communication via a wired communication network constructed among a plurality of devices mounted on a vehicle;
a wireless communication unit that performs wireless communication via a wireless communication network constructed among the plurality of devices; and
a control unit that transmits first data corresponding to transmission data via the wired communication unit and transmit second data corresponding to the transmission data via the wireless communication unit according to a predetermined condition.

2. The in-vehicle communication device according to claim 1, wherein
the control unit
switches communication via one network to communication via an other network in a case where there is unauthorized access to the one of the wired communication network and the wireless communication network.

3. The in-vehicle communication device according to claim 1, wherein
the control unit
switches the communication to transmit at least part of data in a case where a traffic amount of the communication of one of the wired communication network and the wireless communication network exceeds or falls below a predetermined threshold.

4. The in-vehicle communication device according to claim 1, wherein
the control unit
sets the transmission data as one of the first data and the second data, and
sets information obtained by performing error coding processing on the transmission data and used for error correction of the transmission data as an other of the first data and the second data.

5. The in-vehicle communication device according to claim 1, wherein
the control unit
sets encrypted data obtained by performing encryption processing on the transmission data as one of the first data and the second data, and
sets information used to decode the encrypted data as an other of the first data and the second data.

6. The in-vehicle communication device according to claim 1, wherein the first data and the second data are the transmission data being same.

7. The in-vehicle communication device according to claim 6, wherein
the control unit
transmits the first data and the second data same as the first data in a case where it is determined that a traffic condition is dangerous.

8. The in-vehicle communication device according to claim 1, wherein
the control unit
executes processing using reception data received earlier among first reception data received via the wired communication unit and second reception data received via the wireless communication unit.

9. The in-vehicle communication device according to claim 1, wherein
the control unit
determines whether or not first reception data received via the wired communication unit and second reception data received via the wireless communication unit are identical to each other.

10. The in-vehicle communication device according to claim 9, wherein
the control unit
executes processing using one of the first reception data and the second reception data in a case where it is determined that the first reception data and the second reception data are not identical to each other.

11. The in-vehicle communication device according to claim 1, wherein
the control unit
shifts a state of the vehicle to a fail-safe mode in a case where it is determined that at least one of first reception data received via the wired communication unit and second reception data received via the wireless communication is not correctly received.

12. The in-vehicle communication device according to claim 1, wherein the wired communication network of a ring type is constructed in the vehicle.

13. The in-vehicle communication device according to claim 1, wherein a topology of the wireless communication network is same as a topology of the wired communication network.

14. The in-vehicle communication device according to claim 1, wherein a topology of the wireless communication network is different from a topology of the wired communication network.

15. The in-vehicle communication device according to claim 1, wherein
the control unit
performs at least one of the wired communication and the wireless communication based on control information set based on information shared by the wired communication network and the wireless communication network.

16. The in-vehicle communication device according to claim 1, wherein
the control unit
performs the wired communication based on first control information set in the wired communication network, and
performs the wireless communication based on second control information set in the wireless communication network.

17. A communication method comprising:
performing wired communication via a wired communication network constructed among a plurality of devices mounted on a vehicle;
performing wireless communication via a wireless communication network constructed among the plurality of devices; and
transmitting first data corresponding to transmission data via the wired communication network and transmitting second data corresponding to the transmission data via the wireless communication network according to a predetermined condition.

18. A communication system comprising:
a zone control node disposed in a zone of a plurality of zones divided in a vehicle;
a control node that controls communication between a plurality of the zone control nodes; and
a device that is disposed in the zone and communicates with the zone control node corresponding to the zone, wherein
at least one of the zone control node, the control node, and the device comprises:
a wired communication unit that performs wired communication via a wired communication network constructed among a plurality of devices among the zone control node, the control node, and the device mounted on the vehicle;
a wireless communication unit that performs wireless communication via a wireless communication network constructed among the plurality of devices; and
a control unit that transmits first data corresponding to transmission data via the wired communication unit and transmits second data corresponding to the transmission data via the wireless communication unit according to a predetermined condition.
